# EUROPEAN PATENT SPECIFICATION

(11) **EP 4 379 560 B1**
(45) Date of publication and mention of the grant of the patent: **25.03.2026**
(21) Application number: 21957850.7
(22) Date of filing: 24.09.2021
(51) Int. Cl.: G06F 12/14, G06F 12/1009

(54) **ELECTRONIC APPARATUS, AND METHOD FOR SECURELY ACCESSING SOFTWARE**
ELEKTRONISCHE VORRICHTUNG UND VERFAHREN FÜR SICHEREN ZUGRIFF AUF SOFTWARE
APPAREIL ÉLECTRONIQUE ET PROCÉDÉ D'ACCÈS SÉCURISÉ À UN LOGICIEL

(43) Date of publication of application: 05.06.2024
(73) Proprietor: Huawei Technologies Co., Ltd., Shenzhen, Guangdong 518129 (CN)
(72) Inventor: CHEN, Feng, Shenzhen, Guangdong 518129 (CN); XUE, Shan, Shenzhen, Guangdong 518129 (CN); LI, Shuo, Shenzhen, Guangdong 518129 (CN)
(74) Representative: MERH-IP Matias Erny Reichl Hoffmann Patentanwälte PartG mbB
(86) International application number: PCT/CN2021/120172
(87) International publication number: WO 2023/044715

(56) References cited:
- WO-A1-2021/091686
- WO-A1-2021/091686
- WO-A1-2021/091744
- CN-A- 103 488 588
- CN-A- 109 710 544
- US-A- 4 890 223

## Description

### TECHNICAL FIELD

Embodiments of this application relate to the computer security field, and in particular, to an electronic apparatus and a method for securely accessing software.

### BACKGROUND

With rapid development of Internet technologies and smart terminals, more applications are run on a smart terminal. The applications usually relate to various fields, such as an electronic payment application, a biometric recognition application, and an instant messaging application. Because the application is about interests of a user, an increasingly high requirement is imposed on security of a running environment of the terminal.

To ensure the security of the running environment of the terminal, the industry proposes to set a plurality of exception levels (ELs, exception levels) for an electronic apparatus. Software running at a high exception level may access a physical address range corresponding to a low exception level. In a conventional technology, important data such as biometric recognition data (fingerprint data and facial image data) and a key is usually stored in the physical address range corresponding to the low exception level. When the software running at the high exception level is attacked, a hacker may access the important data by using the software, causing leakage of the important data and threatening user interests. Therefore, how to improve software running security still becomes a problem that needs to be resolved.

WO 2021/091686 A1 generally discloses a system comprising: execution logic comprising one or more execution units, memory comprising one or more memory units, and memory access logic for looking-up a mapping between a physical address space of the memory and a virtual address space. The execution logic is arranged to run a plurality of software modules each in a respective partition of the physical address space, including to execute a memory access operation performed by a currently-executing one of said software modules. The memory access operation specifies a virtual address in the virtual address range as a target of the memory access operation. The memory access logic is configured to perform operations of: looking-up a physical address in the physical address space mapped to the virtual address, checking whether a capability granting access to said physical address is found in a storage location to which the currently-executing software module has access, and on condition thereof, granting access to said physical address for performing said memory access operation.

### SUMMARY

According to the electronic apparatus and the method for securely accessing software provided in this application, security of running software can be improved. To achieve the foregoing objective, the following technical solutions are used in this application. In particular, this application provides an electronic apparatus, a method and a computer-readable storage medium, having the features of respective independent claims. The dependent claims relate to preferred embodiments.

According to a first aspect, an embodiment of this application provides an electronic apparatus. The electronic apparatus includes a processor and a first controller. The processor is configured to: run current software, and provide, for the first controller, a logical address of a memory to be accessed by the current software. The first controller converts the logical address into a physical address in the memory, determines whether the physical address is within a preset physical address range corresponding to a current exception level of the current software, and when the physical address is within the preset physical address range, allows the current software to access the logical address. The electronic apparatus has a plurality of exception levels, each of the plurality of exception levels reflects one privilege level (Privilege Level, PL), each exception level corresponds to one physical address range, and the current exception level is one of the plurality of exception levels.

In this embodiment of this application, a corresponding physical address range is set for each exception level, and each physical address range is limited to be accessed only by software running at a corresponding exception level. Therefore, some important instructions or data may be stored in a physical address range that is restricted to access, so that a hacker can be prevented from tampering with or stealing important instructions or data by running software with a high exception level to access a physical address range corresponding to a low exception level, to improve software running security.

In a possible implementation, the first controller is specifically configured to: when the current software is allowed to access the logical address, provide the physical address for the processor; and the processor is further configured to continue to run the current software to access the physical address.

In a possible implementation, the electronic apparatus further includes: a storage unit, configured to store a mapping relationship between the plurality of exception levels and a plurality of physical address ranges; and the first controller is specifically configured to determine, based on the mapping relationship, the preset physical address range corresponding to the current exception level.

In a possible implementation, the storage unit includes a plurality of registers; and the processor is further configured to: when the electronic apparatus is started, load the mapping relationship to the plurality of registers; and lock the plurality of registers after completing the loading.

After the register is locked, the mapping relationship in the register cannot be changed in a running process of the electronic apparatus. In this way, the hacker does not steal important data by rewriting the mapping relationship in the register in the running process of the electronic apparatus, to further improve security of software running.

In a possible implementation, the processor is further configured to: when performing the loading, detect whether the plurality of physical address ranges in the mapping relationship are correct; and when detecting that at least one of the plurality of physical address ranges is incorrect, perform an operation of stopping starting the processor.

Whether the plurality of physical address ranges in the foregoing mapping relationship is correct is detected, to avoid the following case: Some important data is rewritten or stolen by the hacker because the important data is not set in the physical address range.

In a possible implementation, the storage unit includes the memory; and the electronic apparatus further includes a second controller, where the second controller is configured to modify the mapping relationship in the memory.

The second controller is disposed to manage the mapping relationship, so that the hacker can be prevented from directly rewriting the mapping relationship by running the processor.

In a possible implementation, the first controller is further configured to: when the physical address is not within the preset physical address range, perform a security protection operation.

In a possible implementation, the first controller is further configured to: perform a security protection operation when the physical address is within one or more other physical address ranges corresponding to one or more other exception levels, where the plurality of exception levels include the one or more other exception levels; and when the physical address is neither within the preset physical address range nor within the one or more other physical address ranges, allow the current software to access the logical address.

In a possible implementation, the security protection operation includes at least one of the following: resetting the processor, denying the access, indicating the processor to stop running, disabling at least a part of functions of the processor, or preventing the processor from accessing the memory.

According to a second aspect, an embodiment of this application provides a method for securely accessing software applied to an electronic apparatus. The method includes: converting a logical address of a memory to be accessed by current running software into a physical address in the memory, determining whether the physical address is within a preset physical address range corresponding to a current exception level of the current software; and when the physical address is within the preset physical address range, allowing the current software to access the logical address. The electronic apparatus has a plurality of exception levels, each of the plurality of exception levels reflects one privilege level, each exception level corresponds to one physical address range, and the current exception level is one of the plurality of exception levels.

Based on the second aspect, in a possible implementation, a mapping relationship between the plurality of exception levels and a plurality of physical address ranges is stored in a storage unit; and the determining whether the physical address is within a preset physical address range corresponding to a current exception level of the current software includes: determining, based on the mapping relationship, the preset physical address range corresponding to the current exception level.

Based on the second aspect, in a possible implementation, the method further includes: when the physical address is not within the preset physical address range, performing a security protection operation.

Based on the second aspect, in a possible implementation, the method further includes: performing the security protection operation when the physical address is within one or more other physical address ranges corresponding to one or more other exception levels, where the plurality of exception levels include the one or more other exception levels; and when the physical address is neither within the preset physical address range nor within the one or more other physical address ranges, allowing the current software to access the logical address.

Based on the second aspect, in a possible implementation, the security protection operation includes at least one of the following: resetting the processor in the electronic apparatus, denying the access, indicating the processor to stop running, disabling at least a part of functions of the processor, or preventing the processor from accessing the memory.

According to a third aspect, an embodiment of this application provides an apparatus. The apparatus includes: a conversion module, configured to convert a logical address of a memory to be accessed by current running software into a physical address in the memory; a determining module, configured to determine whether the physical address is within a preset physical address range corresponding to a current exception level of the current software; and a first access allowing module, configured to: when the physical address is within the preset physical address range, allow the current software to access the logical address. The electronic apparatus has a plurality of exception levels, each of the plurality of exception levels reflects one privilege level, each exception level corresponds to one physical address range, and the current exception level is one of the plurality of exception levels.

In a possible implementation, a mapping relationship between the plurality of exception levels and the plurality of physical address ranges is stored in a storage unit. The determining module is specifically configured to: determine, based on the mapping relationship, the preset physical address range corresponding to the current exception level.

In a possible implementation, the apparatus further includes a first security protection module, configured to: when the physical address is not within the preset physical address range, perform a security protection operation.

In a possible implementation, the apparatus further includes: a second security protection module, configured to perform a security protection operation when the physical address is within one or more other physical address ranges corresponding to one or more other exception levels, where the plurality of exception levels include the one or more other exception levels; and a second access allowing module, configured to: when the physical address is neither within the preset physical address range nor within the one or more other physical address ranges, allow the current software to access the logical address.

In a possible implementation, the security protection operation includes at least one of the following: resetting the processor in the electronic apparatus, denying the access, indicating the processor to stop running, disabling at least a part of functions of the processor, or preventing the processor from accessing the memory.

According to a fourth aspect, an embodiment of this application provides an apparatus. The apparatus includes a memory and a controller, the memory is configured to store a computer program, and the controller is configured to invoke all or a part of the computer programs stored in the memory, to perform the method according to the second aspect.

According to a fifth aspect, an embodiment of this application provides a computer-readable storage medium. The computer-readable storage medium stores a computer program. When the computer program is executed by a controller, the method according to the second aspect is implemented.

According to a sixth aspect, an embodiment of this application provides a computer program product. When the computer program product is executed by a controller, the method according to the second aspect is implemented.

It can be understood that the technical solutions in the second aspect to the sixth aspect of this application are consistent with the technical solution in the first aspect of this application. Advantageous effects achieved in the aspects and the corresponding feasible implementations are similar, and details are not described again.

### BRIEF DESCRIPTION OF DRAWINGS

To describe the technical solutions in embodiments of this application more clearly, the following briefly introduces the accompanying drawings required for describing embodiments of this application. It is clear that the accompanying drawings in the following description show merely some embodiments of this application, and a person of ordinary skill in the art may still derive other drawings from these accompanying drawings without creative efforts.
FIG. 1 is a schematic diagram of a hardware structure of an electronic apparatus according to an embodiment of this application;
FIG. 2 is a schematic diagram of a software architecture of an electronic apparatus according to an embodiment of this application;
FIG. 3 is a schematic diagram of a mapping relationship between a physical address range in a memory and an exception level according to an embodiment of this application;
FIG. 4 is another schematic diagram of a mapping relationship between a physical address range in a memory and an exception level according to an embodiment of this application;
FIG. 5 is a flowchart of a detection method applied to a controller according to an embodiment of this application;
FIG. 6 is a flowchart of a detection method applied to a controller in a specific scenario according to an embodiment of this application;
FIG. 7 is another schematic diagram of a hardware structure of an electronic apparatus according to an embodiment of this application;
FIG. 8 is a flowchart of a method for securely accessing software according to an embodiment of this application; and
FIG. 9 is a schematic diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

The "first", the "second", and similar terms mentioned herein do not indicate any order, quantity or significance, but are used to only distinguish different components. Similarly, "one", "a", and similar terms also do not indicate a quantity limitation, but indicates that there is at least one. "Connected" and similar terms are not limited to a physical or mechanical connection, but may include an electrical connection, regardless of a direct or indirect connection, equivalent to a connection in a broad sense.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner. In the description of the embodiment of this application, unless otherwise stated, "a plurality of" means two or more than two. For example, a plurality of exception levels are two or more exception levels.

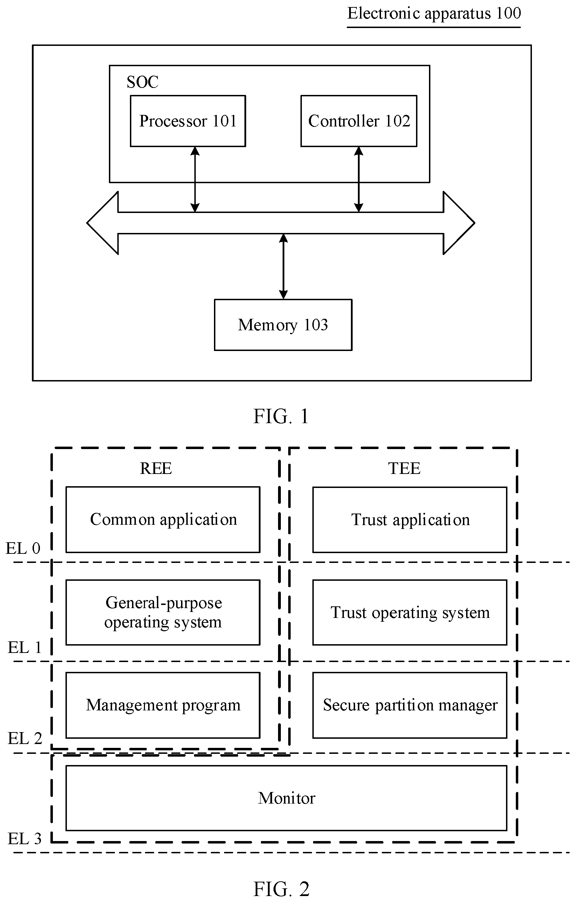

FIG. 1 is a schematic diagram of a hardware architecture of an electronic apparatus 100 according to an embodiment of this application. The electronic apparatus 100 may be located in a terminal. The terminal may be user equipment (user equipment, UE), for example, any type of portable terminal device such as a mobile phone, a tablet computer, or a wearable device (like a smartwatch). FIG. 1 is merely an example of the electronic apparatus 100. Alternatively, the electronic apparatus 100 may be any type of device, for example, a chip, a chip set, or a circuit board on which a chip or a chip set is mounted. This is not limited in this embodiment. The chip, the chip set, or the circuit board on which the chip or the chip set is mounted may work when driven by appropriate software. The electronic apparatus 100 includes a processor 101 and a controller 102. Optionally, the processor 101 and the controller 102 may be integrated into one or more chips. The one or more chips may be considered as a chip set. When one or more processors are integrated into a same chip, the chip is also referred to as a system on a chip (system on a chip, SOC). Details are shown in FIG. 1. The system on a chip may also be integrated with a cache (cache). The processor 101 may include components such as a logic computing unit and a register (including but not limited to a data register, an instruction register, and the like) that are configured to load a program and execute instruction content. A controller 104 may alternatively be outside the processor 101. This is not limited in this embodiment. The processor 101 includes, for example, but is not limited to, a central processing unit (central processing unit, CPU) or a dedicated processor. For example, the dedicated processor includes an artificial intelligence processor, a neural network processor, a digital signal processor, or an image processing processor. The controller 102 may include but is not limited to a memory management unit (Memory Management Unit, MMU). As long as the controller 102 can implement conversion from a virtual address to a physical address and implement a subsequent determining procedure, an implementation form of the controller 102 is not limited in this embodiment. The electronic apparatus 100 may further include one or more other components, for example, a memory 103. For example, the memory 103 may include a volatile memory such as a component configured to store instructions and data, for example, a dynamic random access memory (DRAM). The memory 103 may be selectively integrated into the foregoing SOC or disposed outside the foregoing SOC. FIG. 1 schematically shows a case in which the memory 103 is disposed outside the SOC. The memory 103 may store various operating system programs (for example, a general-purpose operating system program and a trust operating system program), an application, instruction code and data required for running, and the like. By loading a program and instructions and obtaining data, the processor 101 and the controller 102 execute various function applications of the electronic apparatus 100 and data processing.

In this embodiment of this application, a software running architecture of the electronic apparatus 100 may be a TrustZone (TrustZone) architecture proposed by ARM. In the TrustZone architecture, a software running environment of the electronic apparatus 100 may include a rich execution environment (rich execution environment, REE) and a trust execution environment (trust execution environment, TEE), as shown in FIG. 2. Software running in the TEE may be referred to as TEE software, and software running in the REE may be referred to as REE software. Code of the TEE software and code of the REE software are different and isolated from each other. The TEE software is more secure than the REE software. The REE software may include, for example, common application (AP, application) software, general-purpose operating system software, and management program (hypervisor) software. The TEE software may include, for example, trust application (trust application) software, trust operating system software, secure partition management (secure partition management, SPM) software, and monitor (monitor) software. The software in embodiments of this application may include instructions and data. The general-purpose operating system is an operating system that provides an application and a service (for example, a service like instant messaging or shopping) for a user. The general-purpose operating system mainly implements a computing function, for example, includes but is not limited to a Windows system, an Android system, a Redhat Linux system, or a Harmony operating system. These operating systems may be used to support common non-security applications. These common applications are usually third-party applications (for example, a video application and a shopping application). The trust operating system is used to support a secure application, and implement tasks such as security measurement, access control, and security rule decision determining during running of the general-purpose operating system, to ensure correct and trust running of the general-purpose operating system. The security application may include, for example, an application that performs security services such as signature, encryption and decryption calculation, and face comparison. The monitor software is used to support switching between the REE and the TEE.

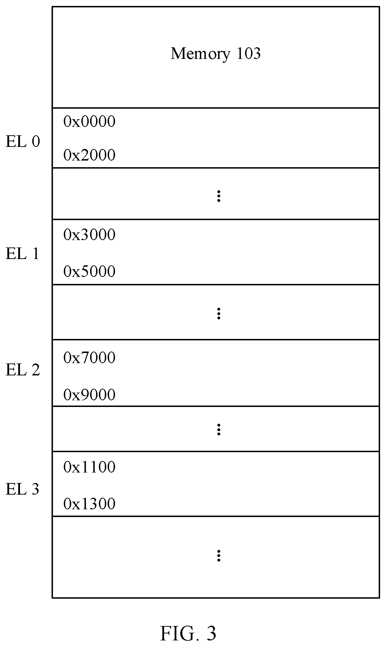

In embodiments of this application, the software running architecture of the electronic apparatus 100 is based on the TrustZone architecture, and the electronic apparatus 100 may further include a plurality of exception levels (exception levels, ELs). FIG. 2 schematically shows four exception levels EL 0 to EL 3. In a specific scenario, the common application and the trust application may run at the exception level EL 0, the general-purpose operating system and the trust operating system may run at the exception level EL 1, the management program and the secure partition management may run at the exception level EL 2, and the monitor may run at the exception level EL 3. The exception level EL 0 is a lowest level, and the exception level EL 3 is a highest level. In embodiments of this application, each exception level corresponds to one physical address range in the memory 103. Important data such as a key, face information, fingerprint data, and signature authentication data is usually stored in a physical address range that corresponds to the exception level EL 1 and that is used to store trust data. Each physical address range corresponding to each exception level is restricted to be accessed only by TEE software running at a corresponding exception level. The access in embodiments of this application may be reading instructions, reading data, or writing data. The following describes in detail access privilege of software to each physical address range and a mapping relationship between an exception level and a physical address range by using specific examples. FIG. 3 schematically shows a physical address range, corresponding to each exception level, in a memory 103, that is, shows the mapping relationship. As shown in FIG. 3, a physical address range 0x0000 to 0x2000 corresponds to an exception level EL 0, a physical address range 0x3000 to 0x5000 corresponds to an exception level EL 1, a physical address range 0x7000 to 0x9000 corresponds to an exception level EL 2, and a physical address range 0x1100 to Ox1300 corresponds to an exception level EL 3. Software running at the exception level EL 0, such as TA, can access only the physical address range 0x0000 to 0x2000 in the memory 103, but cannot access other physical address ranges shown in FIG. 3. Software running at the exception level EL 1, such as a TEE operating system, can access only the physical address range 0x3000 to 0x5000 in the memory 103, but cannot access other physical address ranges shown in FIG. 3. Software running at the exception level EL 2, such as SPM, can access only the physical address range 0x7000 to 0x9000 in the memory 103, but cannot access other physical address ranges shown in FIG. 3. Software running at the exception level EL 3, such as trust firmware, can access only the physical address range 0x1100 to Ox1300 in the memory 103, but cannot access other physical address ranges shown in FIG. 3.

In a conventional technology, software running at a high exception level usually has a higher access privilege, that is, can access a physical address range corresponding to a low exception level. For example, it is assumed that the processor 101 currently runs the monitor software. Because the monitor software runs at the EL 3, the monitor software can access a physical address range corresponding to the exception level EL 1. Because important data such as facial feature data and fingerprint data is stored in the physical address range corresponding to the exception level EL 1, a hacker may steal the important data such as facial feature data or fingerprint recognition data by attacking the monitor software, and this causes leakage of the important data and reduces security of software running. In this embodiment of this application, a corresponding physical address range is set for each exception level, and each physical address range is limited to be accessed only by software running at a corresponding exception level. In this case, some important instructions or data may be stored in a physical address range that is restricted to access, to prevent a hacker from running software with a high exception level to access a physical address range corresponding to a low exception level, and further avoid tampering with or stealing important instructions or data. This improves software running security.

It should be noted that the physical address range that is restricted to access and corresponding to each exception level may be a part or all of the physical address range corresponding to each exception level. When the physical address range corresponding to each exception level further includes another physical address range in addition to the foregoing restricted physical address range, the another physical address range may not be within the restricted access, and a software access situation of the another physical address range may be the same as that in the conventional technology (for example, software running at a high exception level may access a physical address range corresponding to a low exception level). For example, it is assumed that, in addition to the physical address range corresponding to the exception level EL 1 shown in FIG. 3, the physical address range corresponding to the exception level EL 1 further includes a physical address range 0x2050 to 0x2FFF. Because the exception level EL 3 is higher than the exception level EL 1, software running at the exception level EL 3 may access the physical address range 0x2050 to Ox2FFF.

In this embodiment of this application, the following is limited: Access of software running at a current exception level to a physical address range corresponding to another exception level is implemented by the controller 102 based on a physical address to be accessed by software currently running on the processor 101 and a mapping relationship between each exception level and a physical address range. Generally, before the software currently running on the processor 101 accesses instructions or data in the memory 103, the processor 101 needs to provide, for the controller 102, a logical address VA1 in the memory 103 to be accessed by the software currently running on the processor 101. The controller 102 converts the logical address VA1 into a physical address PA1, and detects whether the physical address PA1 is within a physical address range R1 corresponding to the current exception level of the current software. When the controller 102 detects that the physical address PA1 is within the physical address range R1, the current software may be allowed to access the logical address VA1. When the controller 102 detects that the physical address PA1 is not within the physical address range R1, the controller 102 may directly perform a security protection operation. Alternatively, when the controller 102 detects that the physical address PA1 is not within the physical address range R1, the controller 102 may further detect whether the physical address PA1 is within one or more physical address ranges corresponding to one or more other exception levels. When the controller 102 detects that the physical address PA1 is not within the one or more physical address ranges corresponding to the one or more other exception levels, the current software may be allowed to access the logical address VA1. When the controller 102 detects that the physical address PA1 is within the one or more physical address ranges corresponding to the one or more other exception levels, the controller 102 may perform a security protection operation. The security protection operation herein may specifically include but is not limited to at least one of the following: resetting the processor 101, rejecting access to a logical address by software currently running in the processor 101, indicating the processor 101 to stop running, disabling at least a part of functions of the processor 101, and preventing the processor 101 from accessing the memory 103. In this way, security of software running can be improved. It should be noted that, in this embodiment of this application, the controller 102 and the processor 101 may be connected through an electronic line. After the electronic apparatus 100 is powered on and the exception level of the software running on the processor 101 changes, the processor 101 may provide, for the controller 102 through the electronic line, an indication signal indicating the current exception level. For example, the indication signal may be two bits, where "00" indicates the exception level EL 0, "01" indicates the exception level EL 1, "10" indicates the exception level EL 2, and "11" indicates the exception level EL 3. For example, it is assumed that the software running on the processor 101 jumps from the exception level EL 2 to the exception level EL 3, and the exception level of the software running on the processor 101 changes. In this case, the processor 101 may provide the indication signal "11" to the controller 102. Therefore, the controller 102 may determine, based on the indication signal provided by the processor 101, the exception level of the current software running on the processor 101.

In this embodiment of this application, that the controller 102 allows the software currently running on the processor 101 to access the logical address VA1 may include two possible implementations. In a first possible implementation, the controller 102 may directly provide, to the processor 101, the physical address PA1 obtained by converting the logical address VA1, so that the processor 101 accesses the physical address PA1 from the memory 103, to read instructions or read data from the physical address PA1, or write data into the physical address PA1. In a second possible implementation, the electronic apparatus 100 may further include a direct memory access (direct memory access, DMA) controller. The controller 102 may provide the physical address PA1 to the DMA controller, so that the DMA controller moves the instructions or data stored in the physical address PA1 in the memory 103 to a storage area that the processor 101 or another processor 101 expects to store, or moves to-be-stored data in the processor 101 or the storage area to the physical address PA1.

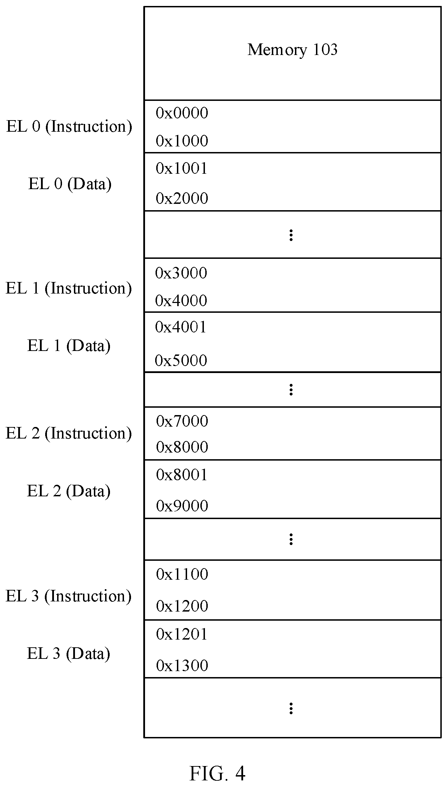

In this embodiment of this application, a working procedure of the processor 101 usually includes a plurality of phase such as fetching an instruction from the memory 103 (instruction fetch), decoding (decoding) an instruction, and executing instruction content. In a phase of executing instruction content, the processor 101 needs to read data from the memory 103 and write operation-completed data back to the memory 103. Therefore, the controller 102 restricts access of the software running at the current exception level to the physical address range corresponding to the another exception level, and may be applied to an instruction fetch stage and an instruction content execution stage of the processor 101. Because the software running in the processor 101 reads an instruction and reads/writes data at different process stages, in a possible implementation of embodiments of this application, in a plurality of physical address ranges corresponding to each exception level, each physical address range may be further divided into two parts, where one part of the physical address range is used to store instructions, and the other part of the physical address range is used to store data. The physical address range of the memory 103 shown in FIG. 3 may be further divided into a case shown in FIG. 4. The physical address range 0x0000 to 0x1000 is used to store an instruction at the exception level EL 0; the physical address range 0x1001 to 0x2000 is used to store data at the exception level EL 0; the physical address range 0x3000 to 0x4000 is used to store an instruction at the exception level EL 1; and the physical address range Ox4001 to 0x5000 is used to store data at the exception level EL 1. The physical address range 0x7000 to 0x8000 is used to store an instruction at the exception level EL 2, the physical address range Ox8001 to 0x9000 is used to store data at the exception level EL 2, the physical address range 0x1100 to 0x1200 is used to store an instruction at the exception level EL 3, and the physical address range Ox1201 to Ox1300 is used to store data at the exception level EL 3.

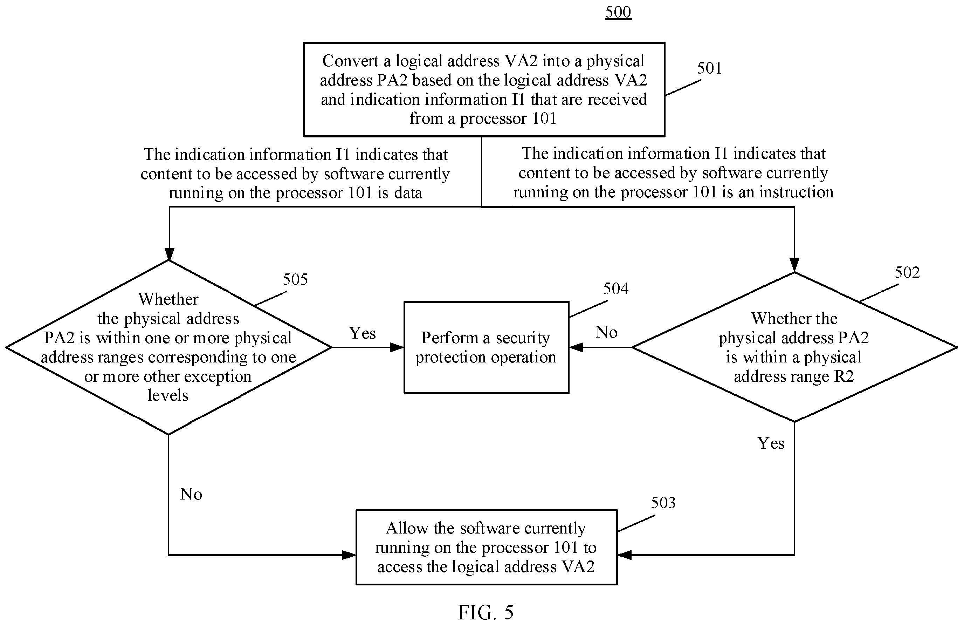

Based on the physical address ranges of the memory 103 shown in FIG. 4, in a possible implementation of embodiments of this application, when providing a logical address VA2 for the controller 102, the processor 101 may further send indication information I1 to the controller 102. The indication information I1 indicates whether content to be accessed by the software currently running on the processor 101 is an instruction or data. Alternatively, the indication information I1 may be provided for the controller 102 in another piece of indication information independent of the logical address VA2. This is not limited in this embodiment. After the controller 102 receives the logical address VA2 and the indication information I1 from the processor 101 and converts the logical address VA2 into a physical address PA2, the controller 102 may separately perform different detection procedures for different content to be accessed by the current running software. The following provides more detailed description by using the detection procedure shown in FIG. 5. Refer to FIG. 5. FIG. 5 is a detection procedure 500 applied to a controller 102. The detection procedure includes the following processes.

Step 501: Convert a logical address VA2 into a physical address PA2 based on the logical address VA2 and indication information I1 that are received from a processor 101. When the indication information I1 indicates that content to be accessed by software currently running on the processor 101 is an instruction, step 502 is performed. When the indication information I1 indicates that content to be accessed by software currently running on the processor 101 is data, step 505 is performed. In specific implementation, the processor 101 requests to access an instruction usually in an instruction fetch phase, and the processor 101 requests to access data in a phase of executing instruction content.

Step 502: Detect whether the physical address PA2 is within a physical address range R2. The physical range R2 is a physical address range that is used to store instructions and that corresponds to an exception level of the current running software. When it is detected that the physical address PA2 is within the physical address range R2, step 503 is performed. When it is detected that the physical address PA2 is not within the physical address range R2, step 504 is performed. Step 503: Allow the software currently running on the processor 101 to access the logical address VA2. Step 504: Perform a security protection operation.

Step 505: Detect whether the physical address PA2 is within one or more physical address ranges corresponding to one or more other exception levels. The one or more other exception levels include one or more exception levels other than a current exception level. When it is detected that the physical address PA2 is within the one or more physical address ranges corresponding to the one or more other exception levels, step 504 is performed. When the physical address PA2 is not within the one or more physical address ranges corresponding to the one or more other exception levels, step 503 is performed.

In other words, for an instruction, a trustlist protection manner is performed in this solution. When PA2 falls within the physical address range R2, the access is allowed, that is, the physical address range R2 belongs to a trustlist, and instructions in the physical address range R2 can be accessed by the software at the current exception level. When PA2 does not fall within the physical address range R2, the access is not allowed. For data, a blocklist protection manner is performed in this solution, that is, one or more physical address ranges corresponding to one or more other exception levels belong to a blocklist. Data in the physical address ranges cannot be accessed by the software at the current exception level, and data not in the physical address ranges can be accessed by the software at the current exception level. The access is allowed when PA2 does not fall into one or more other exception levels; otherwise, the access is not allowed when PA2 falls into any one of one or more other exception levels.

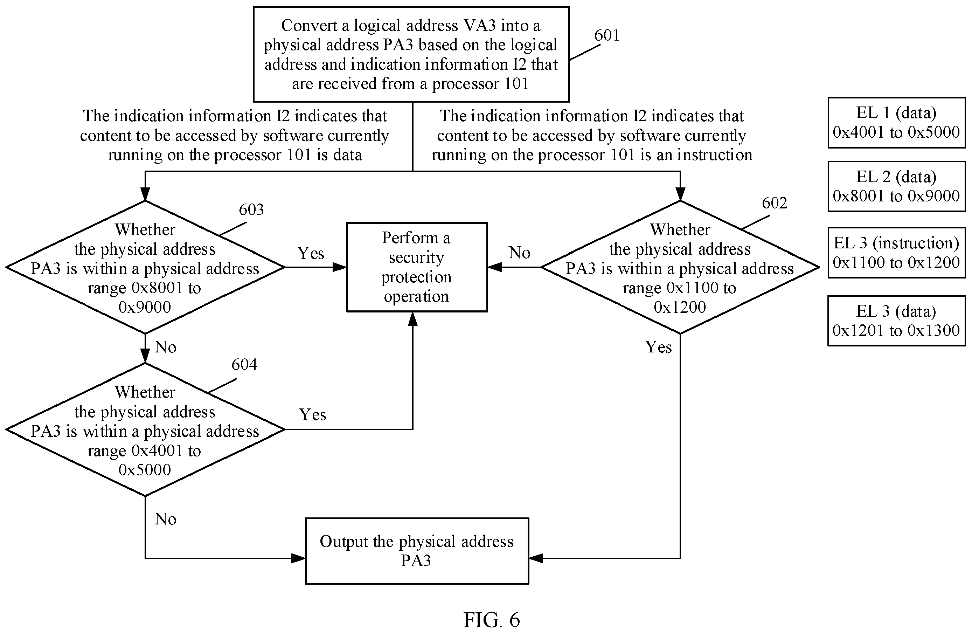

Based on the detection procedure of the controller 102 shown in FIG. 5, the following describes a working process of the controller 102 in more detail by using an example in which the software currently running on the processor 101 is at an exception level EL 3, with reference to physical address ranges corresponding to the exception level EL 3, the exception level EL 2, and the exception level EL 1 shown in FIG. 4 and a specific application scenario shown in FIG. 6. Still refer to FIG. 6. FIG. 6 is a schematic diagram of an application scenario of a working process of the controller 102. The controller 102 may obtain, in advance through an electronic line, an indication signal indicating that the software currently running on the processor 101 is at the exception level EL 3. After receiving a logical address VA3 and indication information I2 from the processor 101, the controller 102 performs the following steps.

Step 601: Convert the logical address VA3 into a physical address PA3; and based on the indication information I2, when the indication information I2 indicates that content to be accessed by the software currently running on the processor 101 is an instruction, step 602 is performed. When the indication information I2 indicates that content to be accessed by the software currently running on the processor 101 is data, step 603 is performed.

Step 602: Determine whether the physical address PA3 is within a physical address range 0x1100 to Ox1200. When it is determined that the physical address PA3 is within the physical address range 0x1100 to 0x1200, the physical address PA3 is output. When it is determined that the physical address PA3 is not within the physical address range 0x1100 to Ox1200, a security protection operation is performed.

Step 603: Determine whether the physical address PA3 is within a physical address range Ox8001 to 0x9000; and when it is determined that the physical address PA3 is not within the physical address range Ox8001 to 0x9000, step 604 is performed; or when it is determined that the physical address PA3 is within the physical address range Ox8001 to 0x9000, the security protection operation is performed. Step 604: Determine whether the physical address PA3 is within a physical address range Ox4001 to 0x5000; and when it is determined that the physical address PA3 is not within the physical address range 0x4001 to 0x5000, the physical address PA3 is output; and when it is determined that the physical address PA3 is within the physical address range Ox4001 to 0x5000, the security protection operation is performed.

Based on the mapping relationship between each exception level and the physical address range in the foregoing embodiments, in this embodiment of this application, a mapping relationship between each exception level and a physical address range may be stored in a plurality of manners. In a first possible implementation, a mapping relationship between an exception level and a physical address range may be stored in a memory 103. In specific implementation, the memory 103 may store a page table. The page table is dedicated to recording the mapping relationship between an exception level and a physical address range, and the mapping relationship is recorded in the page table in a manner of a mapping table. In this possible implementation, to prevent a hacker from rewriting the mapping relationship recorded in the page table, an electronic apparatus 100 may further be provided with a controller 104. The controller 104 and components such as the processor 101 may be integrated into a same SOC, or may be disposed outside the SOC. The controller 104 is configured to modify the mapping relationship recorded in the page table. The controller 104 may be specifically a management unit, configured to manage and maintain the mapping relationship, to avoid a security risk caused by the processor 101 managing the mapping relationship. Even if running software of the processor 101 has a risk, the software of the processor 101 does not modify the mapping relationship, and a determining solution performed based on the foregoing procedure is still secure. The controller 104 configured to maintain and manage the mapping relationship may include a security processor or a security processor subsystem, and a security level of the security processor or the security processor subsystem may be higher than that of the processor 101. For example, the processor 101 cannot access at least a part of data and instructions maintained by the controller 104.

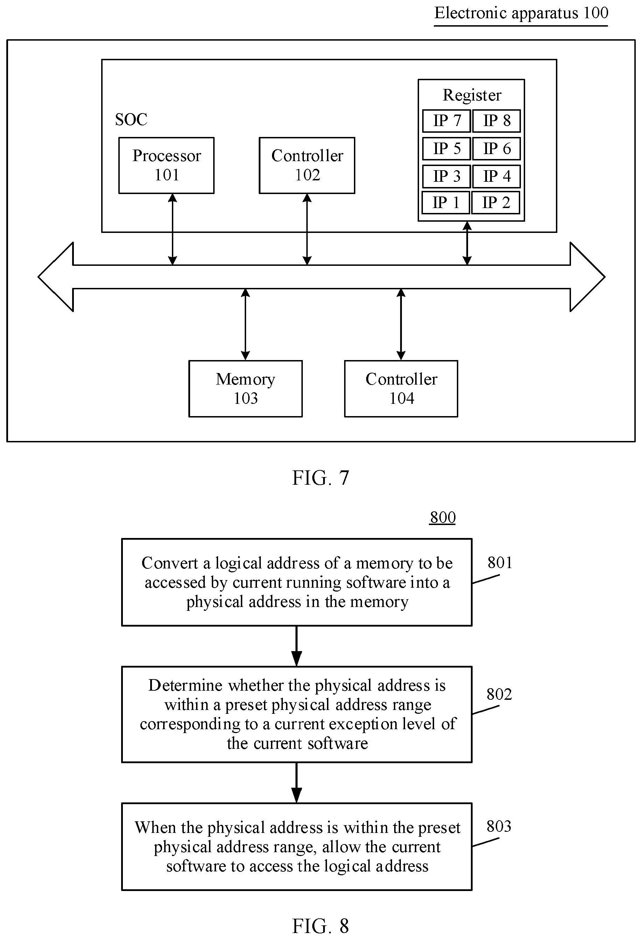

In a second possible implementation, the SOC may be provided with a plurality of registers. The plurality of registers may be selectively located in the processor 101, or may be selectively located outside the processor 101, and may be configured to store mapping relationships between a plurality of exception levels and a plurality of physical address ranges. As shown in FIG. 7, FIG. 7 schematically shows a case in which eight registers IP 1 to IP 8 are disposed in a SOC of an electronic apparatus 100. With reference to the mapping relationship between each physical address range and an exception level in the memory 103 shown in FIG. 4 and with reference to the register shown in FIG. 7, the following describes storage of the mapping relationship by the plurality of registers. Based on the eight physical address ranges shown in FIG. 4, eight registers IP 1 to IP 8 may be set, and each register is dedicated to storing one of the physical address ranges. In specific implementation, an exception level and a data type may be mapped to each register in advance, and then the exception level and a physical address range corresponding to the data type are loaded to the corresponding register when the electronic apparatus is started. The data type herein refers to the instruction or data shown in FIG. 4. For example, a register IP 1 may be preset to a physical address range used to store an instruction at an exception level EL 0, and a register IP 2 may be preset to a physical address range used to store data at the exception level EL 0. Then, when the electronic apparatus 100 is started, the processor 101 may load a physical address range 0x0000 to 0x1000 to the register IP 1, and load a physical address range Ox1001 to 0x2000 to a register IP 2. Settings of other registers are similar to those of IP 1 and IP 2. Details are not described again. Further, after loading the mapping relationship between a physical address range and an exception level to the register, the processor 101 may further lock each register. After the register is locked, the mapping relationship in the register cannot be changed in a running process of the electronic apparatus 100. In this way, the hacker does not steal important data by rewriting the mapping relationship in the register in the running process of the electronic apparatus 100, to further improve security of software running. When the electronic apparatus 100 is started, the mapping relationship may be loaded from the memory 103 or another memory like a non-volatile memory to the register.

It should be noted that, in the foregoing embodiment, after each register is locked, in the running process of the electronic apparatus 100, TEE software at any exception level may read a mapping relationship in each register. The following describes a configuration of the register by using a specific example.

In specific implementation, when the electronic apparatus 100 is started, first, the processor 101 loads, by running startup software, a software program at the exception level EL 3 to a physical address range corresponding to the exception level EL 3 in the memory 103. The processor 101 loads, by running the software program located in the EL 3, a physical address range used to store an instruction corresponding to the exception level EL 3 to a register IP 7, and then locks the register IP 7; and loads, to a register IP 8, a physical address range used to store data corresponding to the exception level EL 3, and then locks the register IP 8. Then, by running the software program at the exception level EL 3, the processor 101 loads software program at the exception level EL 2 to a physical address range corresponding to the exception level EL 2 in the memory 103, loads the software program at the exception level EL 1 to a physical address range corresponding to the exception level EL 1 in the memory 103, and loads the software program at the exception level EL 0 to a physical address range corresponding to the exception level EL 0 in the memory 103, the physical address range used to store the data corresponding to the exception level EL 2 is loaded to the register IP 6, and then the register IP 6 is locked. Then, the processor 101 switches from running a software program located on the EL 3 to running a software program located on the EL 2. The processor 101 detects, by running the software program located in the EL 2, whether a physical address range in the register IP 6 is correct, that is, whether the physical address range of data corresponding to the exception level EL 2 is completely covered, to prevent some important data that is not set in the physical address range from being rewritten or stolen by a hacker; and when it is detected that the physical address range in the register IP 6 is incorrect, performs an operation of stopping starting the processor 101. When it is detected that the physical address range in the register IP 6 is correct, a physical address range used to store an instruction corresponding to the exception level EL 2 is loaded to the IP 5, and then the IP 5 is locked; and a physical address range used to store data corresponding to the exception level EL 1 is loaded to the IP 4, and then the IP 4 is locked. Then, the processor 101 switches from running the software program located on the EL 2 to running the software program located on the EL 1. The processor 101 detects, by running the software program located in the EL 1, whether a physical address range in the register IP 4 is correct; when detecting that the physical address range in the register IP 4 is incorrect, performs an operation of stopping starting the processor 101; and when detecting that the physical address range in the register IP 4 is correct, loads, to the IP 3, a physical address range used to store an instruction corresponding to the exception level EL 1, and then locks the IP 3, and loads, to the IP 2, a physical address range used to store the data corresponding to the exception level EL 0, and then locks the IP 2. Finally, the processor 101 switches from running a software program located on the EL 1 to running a software program located on the EL 0. The processor 101 detects, by running the software program located in the EL 0, whether a physical address range in the register IP 2 is correct. When detecting that the physical address range in the register IP 2 is incorrect, the processor 101 performs an operation of stopping starting the processor 101. When detecting that the physical address range in the register IP 2 is correct, the processor 101 loads, to the IP 1, the physical address range used to store the instruction corresponding to the exception level EL 0, and then locks the IP 1. In this way, configurations of the register IP 1 to the register IP 8 are complete.

In this embodiment, the electronic apparatus 100 may further include a communication unit (not shown in the figure). The communication unit includes but is not limited to a short-distance communication unit or a cellular communication unit. The short-distance communication unit exchanges, by running a short-distance wireless communication protocol, information with another device that is located outside a mobile terminal and that is used to access the Internet. The short-distance wireless communication protocol may include but is not limited to: various protocols supported by a radio frequency identification technology, a Bluetooth communication technology protocol, an infrared communication protocol, or the like. The cellular communication unit accesses a radio access network by running a cellular wireless communication protocol, to implement information exchange between the mobile communication unit and a server that is on the Internet and that supports various applications. The communication unit may be integrated into a same SOC as the processor 101, the controller 102, and the like in this embodiment of this application, or may be disposed separately. In addition, the electronic apparatus 100 may optionally further include a bus, an input/output port I/O, or the like. The bus, the input/output port I/O, and the like may be integrated into a same SOC with the processor 101, the controller 102, and the like. It should be understood that, in actual application, the electronic apparatus 100 may include more or fewer components than those shown in FIG. 1 and FIG. 7. This is not limited in this embodiment of this application.

Based on a same inventive concept, an embodiment of this application further provides a method for securely accessing software. The method for securely accessing software is applied to the electronic apparatus 100 shown in FIG. 1. Still refer to FIG. 8. FIG. 8 shows a procedure 800 of a method for securely accessing software according to an embodiment of this application. The procedure 800 of the method for securely accessing software may be executed by the controller 102, and includes the following steps. Step 801: Convert a logical address of a memory to be accessed by current running software into a physical address in the memory. Step 802: Determine whether the physical address is within a preset physical address range corresponding to a current exception level of the current software. Step 803: When the physical address is within the preset physical address range, allow the current software to access the logical address. The electronic apparatus has a plurality of exception levels, each of the plurality of exception levels reflects one privilege level, each exception level corresponds to one physical address range, and the current exception level is one of the plurality of exception levels. It may be understood that the privilege level and the exception level in this embodiment may be understood as the same or similar concepts applied to different scenarios, and reflect a level limitation of a security privilege. The level limitation may have other different names. If the name change does not go beyond the technical essence of the privilege level, the change should be considered as an equivalent change of embodiments of this application in essence, and does not go beyond the scope of this application.

In a possible implementation, a mapping relationship between the plurality of exception levels and a plurality of physical address ranges is stored in a storage unit; and the determining whether the physical address is within a preset physical address range corresponding to a current exception level of the current software includes: determining, based on the mapping relationship, the preset physical address range corresponding to the current exception level.

In a possible implementation, the method further includes: when the physical address is not within the preset physical address range, performing a security protection operation.

In a possible implementation, the method further includes: performing a security protection operation when the physical address is within one or more other physical address ranges corresponding to one or more other exception levels, where the plurality of exception levels include the one or more other exception levels; and when the physical address is neither within the preset physical address range nor within the one or more other physical address ranges, allowing the current software to access the logical address.

In a possible implementation, the security protection operation includes at least one of the following: resetting the processor in the electronic apparatus, denying the access, indicating the processor to stop running, disabling at least a part of functions of the processor, or preventing the processor from accessing the memory.

It may be understood that, to implement the foregoing functions, the controller 102 includes corresponding hardware and/or software modules for performing the functions. With reference to the steps of each example described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments, the controller 102 may be divided into functional modules based on the foregoing method examples. For example, the controller 102 may be divided into different functional modules corresponding to functions, or two or more functions may be integrated into one processing module. The integrated module may be implemented in a form of hardware. It should be noted that, in this embodiment, the division of the modules is an example, and is merely logical function division. During an actual implementation, another division manner may be used.

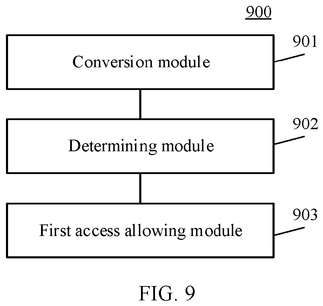

When each function module is obtained through division based on each corresponding function, FIG. 9 is a possible schematic diagram of the apparatus 900 in the foregoing embodiment. The apparatus mentioned above may be further extended. For example, the apparatus 900 corresponding to FIG. 9 may be a software apparatus running on a controller 102, or the apparatus 900 may be an apparatus combining software and hardware and embedded into a controller 102. As shown in FIG. 9, the apparatus 900 may include a conversion module 901, a determining module 902, and a first access allowing module 903. The conversion module 901 is configured to convert a logical address of a memory to be accessed by current running software into a physical address in the memory; the determining module 902 is configured to determine whether the physical address is within a preset physical address range corresponding to a current exception level of the current software; and the first access allowing module 903 is configured to: when the physical address is within the preset physical address range, allow the current software to access the logical address. The electronic apparatus has a plurality of exception levels, each of the plurality of exception levels reflects one privilege level, each exception level corresponds to one physical address range, and the current exception level is one of the plurality of exception levels.

In a possible implementation, a mapping relationship between the plurality of exception levels and the plurality of physical address ranges is stored in a storage unit. The determining module 902 is specifically configured to: determine, based on the mapping relationship, the preset physical address range corresponding to the current exception level.

In a possible implementation, the apparatus 900 further includes a first security protection module (not shown in the figure), configured to: when the physical address is not within the preset physical address range, perform a security protection operation.

In a possible implementation, the apparatus 900 further includes: a second security protection module (not shown in the figure), configured to perform a security protection operation when the physical address is within one or more other physical address ranges corresponding to one or more other exception levels, where the plurality of exception levels include the one or more other exception levels; and a second access allowing module (not shown in the figure), configured to: when the physical address is neither within the preset physical address range nor within the one or more other physical address ranges, allow the current software to access the logical address.

In a possible implementation, the security protection operation includes at least one of the following: resetting the processor in the electronic apparatus, denying the access, indicating the processor to stop running, disabling at least a part of functions of the processor, or preventing the processor from accessing the memory.

The apparatus 900 provided in this embodiment is configured to perform the method for securely accessing software performed by the controller 102, and may achieve a same effect as the foregoing implementation method or apparatus. Specifically, each module corresponding to FIG. 9 may include software, hardware, or a combination thereof. For example, each module may be implemented in a form of software, and is configured to drive the controller 102 to work. Alternatively, each module may include two parts: a corresponding processor and corresponding drive software, that is, implemented by combining software and hardware.

For example, the controller 102 may further include at least one processor and a memory. The at least one processor may invoke all or a part of the computer programs stored in the memory, to control and manage actions of the controller 102. For example, the at least one processor may be configured to support the controller 102 in performing steps performed by the foregoing modules. The memory may be configured to support the controller 102 in storing program code, data, and the like. The memory includes but is not limited to at least a part of storage space, a cache (Cache), or a register of the memory 103. The at least one processor may implement or execute various example logic modules described with reference to content disclosed in this application, and the plurality of logic modules may be one or a combination of a plurality of microprocessors that implement a computing function. In addition, the at least one processor may further include another programmable logic device, a transistor logic device, a discrete hardware component, or the like.

This embodiment further provides a computer-readable storage medium. The computer-readable storage medium stores a computer instruction. When the computer instruction is run on a computer, the computer performs the foregoing related method steps to implement the method for securely accessing software in the foregoing embodiment.

This embodiment further provides a computer program product. When the computer program product runs on a computer, the computer is enabled to perform the foregoing related steps, to implement the method for securely accessing software in the foregoing embodiment.

The computer-readable storage medium or the computer program product provided in embodiments are all configured to perform the foregoing corresponding methods. Therefore, for beneficial effects that can be achieved, refer to the beneficial effects in the foregoing corresponding methods. Details are not described herein again.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or a part of the functions described above.

In addition, function units in embodiments of this application may be integrated into a product, each of the units may exist alone physically, or two or more units are integrated into a product. Corresponding to FIG. 9, when the modules are implemented in the form of a software functional unit and sold or used as an independent product, the functions may be stored in a readable storage medium. Based on such an understanding, the technical solutions in embodiments of this application essentially, or a part that contributes to the current technology, or all or a part of the technical solutions may be embodied in a form of a software product. The software product is stored in a storage medium. Several instructions are included to enable a device (which may be a single-chip microcomputer, a chip, or the like) or a processor (processor) to perform all or some of the steps of the methods in embodiments of this application. The readable storage medium includes: any medium that can store program code, such as a USB flash drive, a removable hard disk, a read only memory (read only memory, ROM), a random access memory (random access memory, RAM), a magnetic disk, an optical disc, or the like.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof.

## Claims

1. An electronic apparatus (100), comprising a processor (101) and a first controller (102), wherein
the processor (101) is configured to: run current software, and provide, for the first controller (102), a logical address of a memory to be accessed by the current software; and
the first controller (102) is configured to convert the logical address into a physical address in the memory, to determine whether the physical address is within a preset physical address range corresponding to a current exception level of the current software, and when the physical address is within the preset physical address range, to allow the current software to access the logical address; the electronic apparatus (100) has a plurality of exception levels, each of the plurality of exception levels reflects one privilege level, each exception level corresponds to one physical address range, and the current exception level is one of the plurality of exception levels.

2. The electronic apparatus (100) according to claim 1, wherein the first controller (102) is specifically configured to: when the current software is allowed to access the logical address, provide the physical address for the processor (101); and
the processor (101) is further configured to continue to run the current software to access the physical address.

3. The electronic apparatus (100) according to claim 1 or 2, wherein the electronic apparatus (100) further comprises: a storage unit, configured to store a mapping relationship between the plurality of exception levels and a plurality of physical address ranges; and
the first controller (102) is specifically configured to determine, based on the mapping relationship, the preset physical address range corresponding to the current exception level.

4. The electronic apparatus (100) according to claim 3, wherein the storage unit comprises a plurality of registers; and
the processor (101) is further configured to: when the electronic apparatus (100) is started, load the mapping relationship to the plurality of registers; and lock the plurality of registers after completing the loading.

5. The electronic apparatus (100) according to claim 4, wherein the processor (101) is further configured to:
when performing the loading, detect whether the plurality of physical address ranges in the mapping relationship are correct; and
when detecting that at least one of the plurality of physical address ranges is incorrect, perform an operation of stopping starting the processor (101).

6. The electronic apparatus (100) according to any one of claims 3 to 5, wherein the storage unit comprises the memory; and
the electronic apparatus (100) further comprises a second controller, wherein the second controller is configured to modify the mapping relationship in the memory.

7. The electronic apparatus (100) according to any one of claims 1 to 6, wherein the first controller (102) is further configured to: when the physical address is not within the preset physical address range, perform a security protection operation.

8. The electronic apparatus (100) according to any one of claims 1 to 6, wherein the first controller (102) is further configured to: perform a security protection operation when the physical address is within one or more other physical address ranges corresponding to one or more other exception levels, wherein the plurality of exception levels comprise the one or more other exception levels; and
when the physical address is neither within the preset physical address range nor within the one or more other physical address ranges, allow the current software to access the logical address.

9. The electronic apparatus (100) according to claim 7 or 8, wherein the security protection operation comprises at least one of the following: resetting the processor (101), denying the access, indicating the processor (101) to stop running, disabling at least a part of functions of the processor (101), or preventing the processor (101) from accessing the memory.

10. A method (800) for securely accessing software applied to an electronic apparatus, comprising:
converting (801) a logical address of a memory to be accessed by current running software into a physical address in the memory;
determining (802) whether the physical address is within a preset physical address range corresponding to a current exception level of the current software; and
when (803) the physical address is within the preset physical address range, allowing the current software to access the logical address, wherein
the electronic apparatus (100) has a plurality of exception levels, each of the plurality of exception levels reflects one privilege level, each exception level corresponds to one physical address range, and the current exception level is one of the plurality of exception levels.

11. The method (800) according to claim 10, wherein a mapping relationship between the plurality of exception levels and a plurality of physical address ranges is stored in a storage unit; and the determining (802) whether the physical address is within a preset physical address range corresponding to a current exception level of the current software comprises:
determining, based on the mapping relationship, the preset physical address range corresponding to the current exception level.

12. The method (800) according to claim 10 or 11, wherein the method (800) further comprises:
when the physical address is not within the preset physical address range, performing a security protection operation.

13. The method (800) according to any one of claims 10 to 12, wherein the method (800) further comprises:
performing the security protection operation when the physical address is within one or more other physical address ranges corresponding to one or more other exception levels, wherein the plurality of exception levels comprise the one or more other exception levels; and
when the physical address is neither within the preset physical address range nor within the one or more other physical address ranges, allowing the current software to access the logical address.

14. The method (800) according to claim 12 or 13, wherein the security protection operation comprises at least one of the following: resetting a processor in the electronic apparatus, denying the access, indicating the processor to stop running, disabling at least a part of functions of the processor, or preventing the processor from accessing the memory.

15. A computer-readable storage medium, wherein the computer-readable storage medium stores a computer program, and when the computer program is executed by a controller, the method according to any one of claims 10 to 14 is implemented.

## Patentansprüche

1. Elektronische Vorrichtung (100), die einen Prozessor (101) und eine erste Steuerung (102) umfasst, wobei
der Prozessor (101) dafür ausgelegt ist, aktuelle Software laufen zu lassen und der ersten Steuerung (102) eine logische Adresse eines Speichers, auf den durch die aktuelle Software zugegriffen werden soll, bereitzustellen; und
die erste Steuerung (102) dafür ausgelegt ist, die logische Adresse in eine physikalische Adresse im Speicher umzusetzen, um zu bestimmen, ob die physikalische Adresse in einem voreingestellten Bereich physikalischer Adressen liegt, der einem aktuellen Ausnahmeniveau der aktuellen Software entspricht, und wenn die physikalische Adresse in dem voreingestellten Bereich physikalischer Adressen liegt, der aktuellen Software zu erlauben, auf die logische Adresse zuzugreifen; die elektronische Vorrichtung (100) mehrere Ausnahmeniveaus aufweist, wobei jedes der mehreren Ausnahmeniveaus ein Privilegniveau widerspiegelt, wobei jedes Ausnahmeniveau einem Bereich physikalischer Adressen entspricht und das aktuelle Ausnahmeniveau eines der mehreren Ausnahmeniveaus ist.

2. Elektronische Vorrichtung (100) nach Anspruch 1, wobei die erste Steuerung (102) speziell für Folgendes ausgelegt ist: wenn der aktuellen Software erlaubt wird, auf die logische Adresse zuzugreifen, Bereitstellen der physikalischen Adresse für den Prozessor (101); und
der Prozessor (101) ferner dafür ausgelegt ist, die aktuelle Software weiter laufen zu lassen, um auf die physikalische Adresse zuzugreifen.

3. Elektronische Vorrichtung (100) nach Anspruch 1 oder 2, wobei die elektronische Vorrichtung (100) ferner Folgendes umfasst: eine Speicherungseinheit, die dafür ausgelegt ist, eine Abbildungsbeziehung zwischen den mehreren Ausnahmeniveaus und mehreren physikalischen Adressenbereichen zu speichern; und
die erste Steuerung (102) speziell dafür ausgelegt ist, den voreingestellten Bereich physikalischer Adressen, der dem aktuellen Ausnahmeniveau entspricht, auf der Basis der Abbildungsbeziehung zu bestimmen.

4. Elektronische Vorrichtung (100) nach Anspruch 3, wobei die Speicherungseinheit mehrere Register umfasst; und
der Prozessor (101) ferner für Folgendes ausgelegt ist: Laden der Abbildungsbeziehung in die mehreren Register, wenn die elektronische Vorrichtung (100) gestartet wird; und Sperren der mehreren Register nach Abschluss des Ladens.

5. Elektronische Vorrichtung (100) nach Anspruch 4, wobei der Prozessor (101) ferner für Folgendes ausgelegt ist:
Detektieren beim Durchführen des Ladens, ob die mehreren Bereiche physikalischer Adressen in der Abbildungsbeziehung korrekt sind; und
wenn detektiert wird, dass mindestens einer der mehreren Bereiche physikalischer Adressen falsch ist, Ausführen einer Operation des Stoppens des Startens des Prozessors (101).

6. Elektronische Vorrichtung (100) nach einem der Ansprüche 3 bis 5, wobei die Speicherungseinheit den Speicher umfasst; und
die elektronische Vorrichtung (100) ferner eine zweite Steuerung umfasst, wobei die zweite Steuerung dafür ausgelegt ist, die Abbildungsbeziehung im Speicher zu modifizieren.

7. Elektronische Vorrichtung (100) nach einem der Ansprüche 1 bis 6, wobei die erste Steuerung (102) ferner für Folgendes ausgelegt ist: wenn die physikalische Adresse nicht in dem voreingestellten Bereich physikalischer Adressen liegt, Ausführen einer Sicherheitsschutzoperation.

8. Elektronische Vorrichtung (100) nach einem der Ansprüche 1 bis 6, wobei die erste Steuerung (102) ferner für Folgendes ausgelegt ist: Ausführen einer Sicherheitsschutzoperation, wenn die physikalische Adresse in einem oder mehreren anderen Bereichen physikalischer Adressen liegt, die einem oder mehreren anderen Ausnahmeniveaus entsprechen, wobei die mehreren Ausnahmeniveaus das eine oder die mehreren anderen Ausnahmeniveaus umfassen; und
wenn die physikalische Adresse weder in dem voreingestellten Bereich physikalischer Adressen noch in dem einen oder den mehreren anderen Bereichen physikalischer Adressen liegt, der aktuellen Software erlauben, auf die logische Adresse zuzugreifen.

9. Elektronische Vorrichtung (100) nach Anspruch 7 oder 8, wobei die Sicherheitsschutzoperation mindestens eines der Folgenden umfasst: Rücksetzen des Prozessors (101), Verweigern des Zugriffs, dem Prozessor (101) angeben, dass er aufhört zu laufen, Deaktivieren mindestens eines Teils von Funktionen des Prozessors (101) oder Verhindern, dass der Prozessor (101) auf den Speicher zugreift.

10. Verfahren (800) zum sicheren Zugreifen auf Software, das auf eine elektronische Vorrichtung angewandt wird, umfassend:
Umwandeln (801) einer logischen Adresse eines Speichers, auf den durch aktuelle laufende Software zugegriffen werden soll, in eine physikalische Adresse im Speicher; Bestimmen (802), ob die physikalische Adresse in einem voreingestellten Bereich physikalischer Adressen liegt, der einem aktuellen Ausnahmeniveau der aktuellen Software entspricht, und
wenn (803) die physikalische Adresse in dem voreingestellten Bereich physikalischer Adressen liegt, der aktuellen Software erlauben, auf die logische Adresse zuzugreifen, wobei die elektronische Vorrichtung (100) mehrere Ausnahmeniveaus aufweist, jedes der mehreren Ausnahmeniveaus ein Privilegniveau widerspiegelt, jedes Ausnahmeniveau einem Bereich physikalischer Adressen entspricht und das aktuelle Ausnahmeniveau eines der mehreren Ausnahmeniveaus ist.

11. Verfahren (800) nach Anspruch 10, wobei eine Abbildungsbeziehung zwischen den mehreren Ausnahmeniveaus und mehreren Bereichen physikalischer Adressen in einer Speicherungseinheit gespeichert wird; und das Bestimmen (802), ob die physikalische Adresse in einem voreingestellten Bereich physikalischer Adressen liegt, der einem aktuellen Ausnahmeniveau der aktuellen Software entspricht, Folgendes umfasst: Bestimmen des dem aktuellen Ausnahmeniveau entsprechenden voreingestellten Bereich physikalischer Adressen auf der Basis der Abbildungsbeziehung.

12. Verfahren (800) nach Anspruch 10 oder 11, wobei das Verfahren (800) ferner Folgendes umfasst:
wenn die physikalische Adresse nicht in dem voreingestellten Bereich physikalischer Adressen liegt, Ausführen einer Sicherheitsschutzoperation.

13. Verfahren (800) nach einem der Ansprüche 10 bis 12, wobei das Verfahren (800) ferner Folgendes umfasst:
Ausführen der Sicherheitsschutzoperation, wenn die physikalische Adresse in einem oder mehreren anderen Bereichen physikalischer Adressen liegt, die einem oder mehreren anderen Ausnahmeniveaus entsprechen, wobei die mehreren Ausnahmeniveaus das eine oder die mehreren anderen Ausnahmeniveaus umfassen; und
wenn die physikalische Adresse weder in dem voreingestellten Bereich physikalischer Adressen noch in dem einen oder den mehreren anderen Bereichen physikalischer Adressen liegt, der aktuellen Software erlauben, auf die logische Adresse zuzugreifen.

14. Verfahren (800) nach Anspruch 12 oder 13, wobei die Sicherheitsschutzoperation mindestens eines der Folgenden umfasst: Rücksetzen eines Prozessors in der elektronischen Vorrichtung, Verweigern des Zugriffs, dem Prozessor angeben, dass er aufhört zu laufen, Deaktivieren mindestens eines Teils von Funktionen des Prozessors oder Verhindern, dass der Prozessor auf den Speicher zugreift.

15. Computerlesbares Speicherungsmedium, wobei das computerlesbare Speicherungsmedium ein Computerprogramm speichert, und wenn das Computerprogramm durch eine Steuerung ausgeführt wird, das Verfahren nach einem der Ansprüche 10 bis 14 implementiert wird.

## Revendications

1. Appareil électronique (100) comprenant un processeur (101) et un premier contrôleur (102), dans lequel :
le processeur (101) est configuré pour : exécuter un logiciel en cours et fournir, au premier contrôleur (102), une adresse logique d'une mémoire devant être accessible par le logiciel en cours ; et
le premier contrôleur (102) est configuré pour convertir l'adresse logique en une adresse physique dans la mémoire pour déterminer si l'adresse physique se situe dans une plage d'adresses physiques prédéfinie correspondant à un niveau d'exception courant du logiciel en cours, et, lorsque l'adresse physique se situe dans la plage d'adresses physiques prédéfinie, autoriser le logiciel en cours à accéder à l'adresse logique ; et l'appareil électronique (100) comporte une pluralité de niveaux d'exception, chacun de la pluralité de niveaux d'exception reflétant un niveau de privilège, chaque niveau d'exception correspondant à une plage d'adresses physiques, et le niveau d'exception courant étant l'un de la pluralité de niveaux d'exception.

2. Appareil électronique (100) selon la revendication 1, dans lequel le premier contrôleur (102) est spécifiquement configuré pour : lorsque le logiciel en cours est autorisé à accéder à l'adresse logique, fournir l'adresse physique au processeur (101) ; et
le processeur (101) est en outre configuré pour continuer d'exécuter le logiciel en cours afin d'accéder à l'adresse physique.

3. Appareil électronique (100) selon la revendication 1 ou la revendication 2, dans lequel l'appareil électronique (100) comprend en outre : une unité de stockage, configurée pour stocker une relation de correspondance entre la pluralité de niveaux d'exception et une pluralité de plages d'adresses physiques ; et
le premier contrôleur (102) est spécifiquement configuré pour déterminer, sur la base de la relation de correspondance, la plage d'adresses physiques prédéfinie correspondant au niveau d'exception courant.

4. Appareil électronique (100) selon la revendication 3, dans lequel l'unité de stockage comprend une pluralité de registres ; et
le processeur (101) est en outre configuré : lorsque l'appareil électronique (100) est démarré, pour charger la relation de correspondance dans la pluralité de registres ; et verrouiller la pluralité de registres après avoir achevé le chargement.

5. Appareil électronique (100) selon la revendication 4, dans lequel le processeur (101) est en outre configuré :
lors de l'exécution du chargement, pour détecter si la pluralité de plages d'adresses physiques de la relation de correspondance sont correctes ; et
lorsqu'il est détecté qu'au moins une de la pluralité de plages d'adresses physiques est incorrecte, pour effectuer une opération visant à interrompre le démarrage du processeur (101).

6. Appareil électronique (100) selon l'une quelconque des revendications 3 à 5, dans lequel l'unité de stockage comprend la mémoire ; et
l'appareil électronique (100) comprend en outre un second contrôleur, le second contrôleur étant configuré pour modifier la relation de correspondance dans la mémoire.

7. Appareil électronique (100) selon l'une quelconque des revendications 1 à 6, dans lequel le premier contrôleur (102) est en outre configuré :
lorsque l'adresse physique ne se situe pas dans la plage d'adresses physiques prédéfinie, pour exécuter une opération de protection de sécurité.

8. Appareil électronique (100) selon l'une quelconque des revendications 1 à 6, dans lequel le premier contrôleur (102) est en outre configuré pour :
exécuter une opération de protection de sécurité lorsque l'adresse physique se situe dans une ou plusieurs autres plages d'adresses physiques correspondant à un ou plusieurs autres niveaux d'exception, la pluralité de niveaux d'exception comprenant les un ou plusieurs autres niveaux d'exception ; et
lorsque l'adresse physique ne se situe ni dans la plage d'adresses physiques prédéfinie, ni dans les une ou plusieurs autres plages d'adresses physiques, autoriser le logiciel en cours à accéder à l'adresse logique.

9. Appareil électronique (100) selon la revendication 7 ou la revendication 8, dans lequel l'opération de protection de sécurité comprend au moins l'une des opérations suivantes :
réinitialiser le processeur (101), refuser l'accès, indiquer au processeur (101) de cesser de fonctionner, désactiver au moins une partie des fonctions du processeur (101) ou empêcher le processeur (101) d'accéder à la mémoire.

10. Procédé (800) d'accès sécurisé à un logiciel appliqué à un appareil électronique, le procédé comprenant les étapes suivantes :
convertir (801) une adresse logique d'une mémoire devant être accédée par un logiciel en cours d'exécution en une adresse physique dans la mémoire ;
déterminer (802) si l'adresse physique se situe dans une plage d'adresses physiques prédéfinie correspondant à un niveau d'exception courant du logiciel en cours ; et
lorsque (803) l'adresse physique se situe dans la plage d'adresses physiques prédéfinie, autoriser le logiciel en cours à accéder à l'adresse logique, où
l'appareil électronique (100) comporte une pluralité de niveaux d'exception, chacun de la pluralité de niveaux d'exception reflétant un niveau de privilège, chaque niveau d'exception correspondant à une plage d'adresses physiques, et le niveau d'exception courant étant l'un de la pluralité de niveaux d'exception.

11. Procédé (800) selon la revendication 10, dans lequel une relation de correspondance entre la pluralité de niveaux d'exception et une pluralité de plages d'adresses physiques est stockée dans une unité de stockage ; et dans lequel la détermination (802) si l'adresse physique se situe dans une plage d'adresses physiques prédéfinie correspondant à un niveau d'exception courant du logiciel en cours comprend l'étape suivante :
déterminer, sur la base de la relation de correspondance, la plage d'adresses physiques prédéfinie correspondant au niveau d'exception courant.

12. Procédé (800) selon la revendication 10 ou la revendication 11, dans lequel le procédé (800) comprend en outre l'étape suivante :
lorsque l'adresse physique ne se situe pas dans la plage d'adresses physiques prédéfinie, exécuter une opération de protection de sécurité.

13. Procédé (800) selon l'une quelconque des revendications 10 à 12, dans lequel le procédé (800) comprend en outre les étapes suivantes :
exécuter l'opération de protection de sécurité lorsque l'adresse physique se situe dans une ou plusieurs autres plages d'adresses physiques correspondant à un ou plusieurs autres niveaux d'exception, la pluralité de niveaux d'exception comprenant les un ou plusieurs autres niveaux d'exception ; et
lorsque l'adresse physique ne se situe ni dans la plage d'adresses physiques prédéfinie, ni dans les une ou plusieurs autres plages d'adresses physiques, autoriser le logiciel en cours à accéder à l'adresse logique.

14. Procédé (800) selon la revendication 12 ou la revendication 13, dans lequel l'opération de protection de sécurité comprend au moins l'une des opérations suivantes : réinitialiser un processeur dans l'appareil électronique, refuser l'accès, indiquer au processeur d'arrêter de fonctionner, désactiver au moins une partie des fonctions du processeur ou empêcher le processeur d'accéder à la mémoire.

15. Support d'enregistrement lisible par ordinateur, le support d'enregistrement lisible par ordinateur stockant un programme informatique et, lorsque le programme informatique est exécuté par un contrôleur, le procédé selon l'une quelconque des revendications 10 à 14 est mis en œuvre.
